# EUROPEAN PATENT APPLICATION

(11) **EP 4 411 267 A1**
(43) Date of publication of application: **07.08.2024**
(21) Application number: 21959263.1
(22) Date of filing: 28.09.2021
(51) Int. Cl.: F24F 11/77, F24F 110/52, F24F 7/007, F24F 7/08

(54) **VENTILATION DEVICE AND VENTILATION SYSTEM**

(71) Applicant: MITSUBISHI ELECTRIC CORPORATION, Chiyoda-ku Tokyo 100-8310 (JP)
(72) Inventor: TAKAHASHI, Atsushi, Tokyo 100-8310 (JP); KOMAE, Sota, Tokyo 100-8310 (JP); NAGATA, Fukutaro, Tokyo 100-8310 (JP)
(74) Representative: Pfenning, Meinig & Partner mbB
(86) International application number: PCT/JP2021/035677
(87) International publication number: WO 2023/053215

(57) **Abstract**

There is provided a ventilator capable of efficiently preventing pollution outside a room from flowing into the room in accordance with the pollution level of outdoor air and capable of securing comfortableness of people inside the room. To achieve this, the ventilator includes an air supply unit, an air exhaust unit, an air supply volume changing unit configured to change air supply volume, an air exhaust volume changing unit configured to change air exhaust volume, an air purification unit configured to purify air to be supplied into a room, a data acquisition unit configured to acquire outdoor air environment data including information on pollution level of outdoor air from an external data source, and a control unit configured to control the air supply volume changing unit and the air exhaust volume changing unit. The control unit switches from first control to second control and performs the second control based on the outdoor air environment data when the pollution level of the outdoor air increases above a predetermined standard, sets the air supply volume to a first air supply volume and sets the air exhaust volume to a first air exhaust volume in the first control, and sets the air supply volume to a second air supply volume and sets the air exhaust volume to a second air exhaust volume in the second control. An amount of increase of the second air supply volume relative to the first air supply volume is greater than an amount of increase of the second air exhaust volume relative to the first air exhaust volume.

## Description

### Technical Field

The present disclosure relates to a ventilator and a ventilation system.

### Background Art

As a ventilation system, a system is known which includes air quality conversion means capable of converting air quality of outdoor air into environmentally improved air, blowing means, and duct means for sending the environmentally improved air converted by the air quality conversion means to inside a building by the blowing means, in which an air exhaust unit that exhausts air inside the building to outside is provided, and air exhaust volume of the air exhaust unit is made changeable to adjust a difference in pressure between the inside and the outside of the building (see, for example, PTL 1).

### Citation List

### Patent Literature

[PTL 1] JP 2002-195623 A

### Summary of the Invention

### Problem to be Solved by the Invention

However, in the technique as disclosed in PTL 1, it is difficult to grasp the pollution level of air outside the building, and it is difficult to efficiently prevent pollution outside a room from flowing into the room by adjusting air supply volume and air exhaust volume in accordance with the pollution level of outdoor air.

The present disclosure has been made to solve such a problem. An object of the present disclosure is to provide a ventilator and a ventilation system capable of efficiently preventing pollution outside a room from flowing into the room by adjusting air supply volume and air exhaust volume in accordance with the pollution level of outdoor air.

### Solution to Problem

A ventilator according to the present disclosure includes: an air supply unit configured to introduce outdoor air from outside a room and supply the air into the room; an air exhaust unit configured to exhaust air inside the room to outside the room; an air supply volume changing unit configured to change air supply volume of the air supply unit; an air exhaust volume changing unit configured to change air exhaust volume of the air exhaust unit; an air purification unit configured to purify the air to be supplied into the room by the air supply unit; a data acquisition unit configured to acquire outdoor air environment data including at least information on pollution level of the outdoor air from an external data source, and a control unit configured to control the air supply volume changing unit and the air exhaust volume changing unit, the control unit being configured to, based on the outdoor air environment data, switch from first control to second control and perform the second control when the pollution level of the outdoor air increases above a predetermined standard, the control unit being configured to set the air supply volume of the air supply unit to a first air supply volume and set the air exhaust volume of the air exhaust unit to a first air exhaust volume in the first control, the control unit being configured to set the air supply volume of the air supply unit to a second air supply volume and set the air exhaust volume of the air exhaust unit to a second air exhaust volume in the second control, an amount of increase of the second air supply volume relative to the first air supply volume being greater than an amount of increase of the second air exhaust volume relative to the first air exhaust volume.

Or a ventilator according to the present disclosure includes: an air supply unit configured to introduce outdoor air from outside a room and supply the air into the room; an air exhaust unit configured to exhaust air inside the room to outside the room; an air supply volume changing unit configured to change air supply volume of the air supply unit; an air exhaust volume changing unit configured to change air exhaust volume of the air exhaust unit; an air purification unit configured to purify the air to be supplied into the room by the air supply unit; a data acquisition unit configured to acquire outdoor air environment data including at least information on pollution level of the outdoor air from outside, and a control unit configured to control the air supply volume changing unit and the air exhaust volume changing unit, the control unit being configured to, based on the outdoor air environment data, switch from first control to second control and perform the second control when the pollution level of the outdoor air increases above a predetermined standard, the control unit being configured to set the air supply volume of the air supply unit to a first air supply volume and set the air exhaust volume of the air exhaust unit to a first air exhaust volume in the first control, the control unit being configured to set the air supply volume of the air supply unit to a second air supply volume and set the air exhaust volume of the air exhaust unit to a second air exhaust volume in the second control, an amount of decrease of the second air supply volume relative to the first air supply volume being smaller than an amount of decrease of the second air exhaust volume relative to the first air exhaust volume.

A ventilation system according to the present disclosure includes: the ventilator described above; and an air conditioner configured to perform air conditioning inside the room, the air conditioner being configured to perform coordinated air conditioning operation when the ventilator performs the second control.

### Advantageous Effects of the Invention

According to a ventilator and a ventilation system according to the present disclosure, it is possible to provide an effect of capable of efficiently preventing pollution outside a room from flowing into the room by adjusting air supply volume and air exhaust volume in accordance with the pollution level of outdoor air.

### Brief Description of the Drawings

Fig. 1 is a cross-sectional view schematically illustrating a configuration of a building in which a ventilator according to First Embodiment is installed.
Fig. 2 is a block diagram illustrating a configuration of a control system of the ventilator according to First Embodiment.
Fig. 3 is a flowchart illustrating an example of operation of the ventilator according to First Embodiment.
Fig. 4 is a flowchart illustrating another example of the operation of the ventilator according to First Embodiment.
Fig. 5 is a cross-sectional view schematically illustrating a configuration of a building in which the ventilator and the ventilation system according to Second Embodiment are installed.
Fig. 6 is a perspective view of a heat exchange element provided in the ventilator according to Second Embodiment.
Fig. 7 is a block diagram illustrating a configuration of a control system of the ventilator and the ventilation system according to Second Embodiment.
Fig. 8 is a flowchart illustrating an example of operation of the ventilation system according to Second Embodiment.
Fig. 9 is a flowchart illustrating an example of operation of an air conditioner according to Second Embodiment.

### Description of Embodiments

Embodiments for implementing a ventilator and a ventilation system according to the present disclosure will be described with reference to the accompanying drawings. In respective drawings, the same reference numerals will be assigned to the same or corresponding portions, and overlapping description will be simplified or omitted as appropriate. In the following description, a positional relationship of respective structures will be expressed on the basis of an illustrated state for convenience sake. Note that the present disclosure is not limited to the following embodiments, and the respective embodiments can be free combined, arbitrary components of the respective embodiments can be changed or arbitrary components of the respective embodiments can be omitted in a range not deviating from the gist of the present disclosure.

### First embodiment

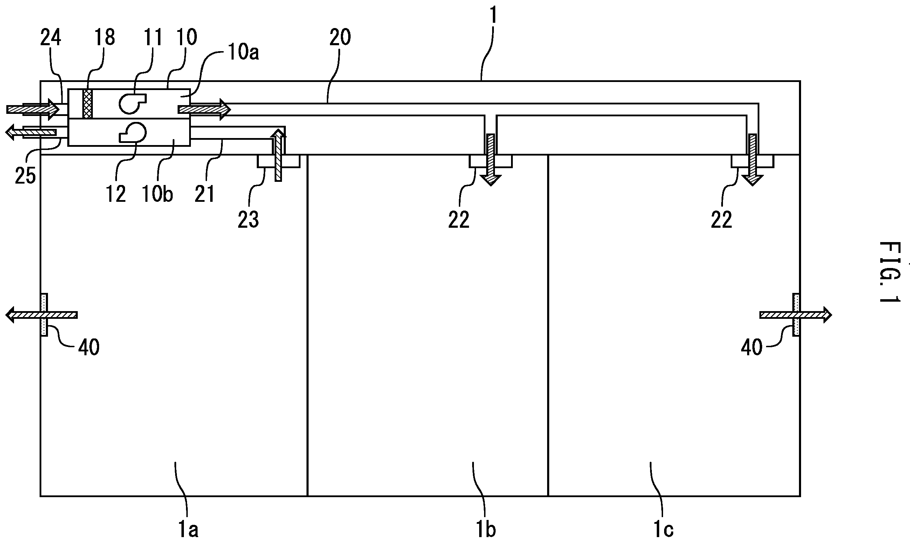

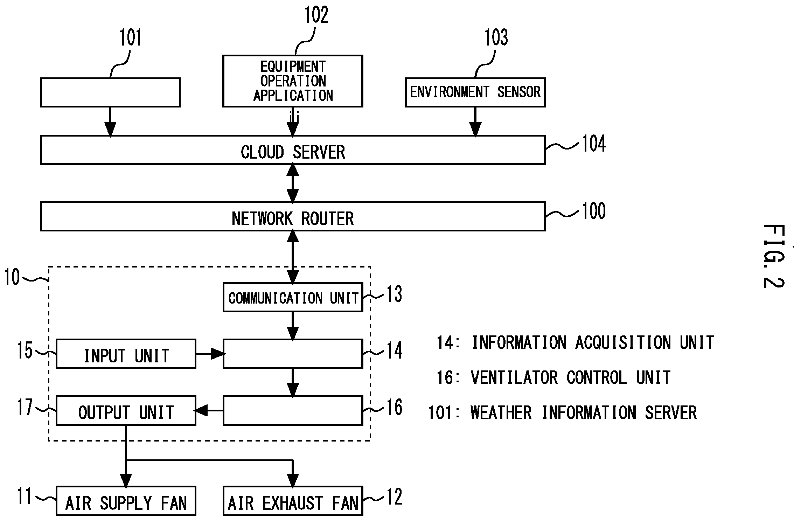

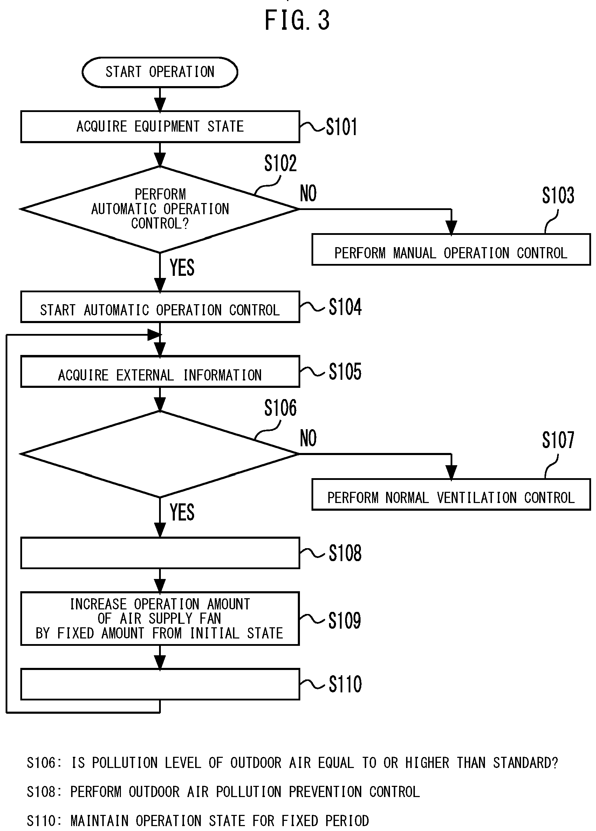

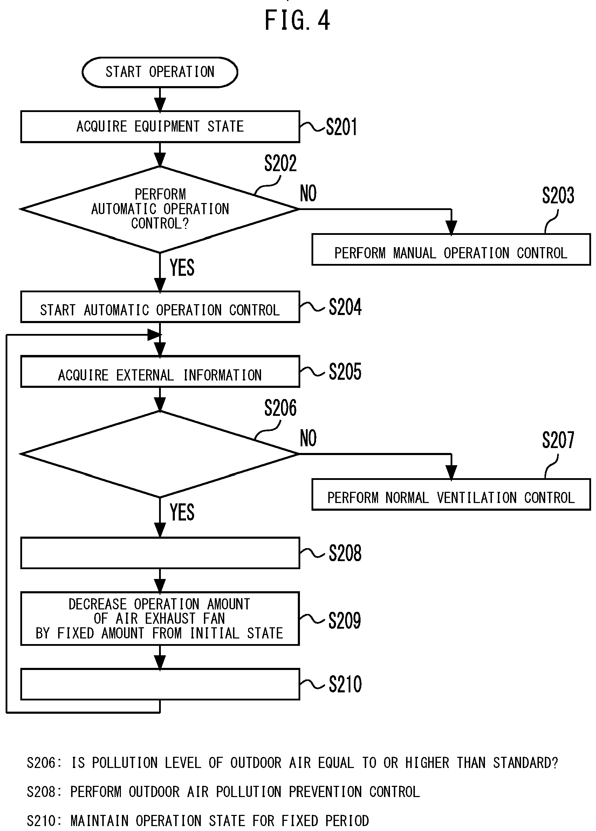

A first embodiment of the present disclosure will be described with reference to Fig. 1 to Fig. 4. Fig. 1 is a cross-sectional view schematically illustrating a configuration of a building in which a ventilator is installed. Fig. 2 is a block diagram illustrating a configuration of a control system of the ventilator. Fig. 3 is a flowchart illustrating an example of operation of the ventilator. Fig. 4 is a flowchart illustrating another example of the operation of the ventilator.

Fig. 1 schematically illustrates an example of a building 1 in which a ventilator according to the present embodiment is installed. As illustrated in Fig. 1, one or more rooms to be ventilated are provided in the building 1. In the illustrated example, three rooms of a first room 1a, a second room 1b, and a third room 1c are provided in the building 1.

A ventilator body 10 is installed in the building 1. In the illustrated configuration example, the ventilator body 10 is installed above a ceiling of the building. The ventilator body 10 is provided to ventilate each room of the building 1, that is, introduce outdoor air into each room of the building 1 and exhaust air inside each room to outside the room. The ventilator body 10 has a chassis. An air supply path 10a and an air exhaust path 10b are formed in the chassis of the ventilator body 10.

An indoor side air supply duct 20 and an indoor side air exhaust duct 21 are provided in the building 1. In the illustrated configuration example, the indoor side air supply duct 20 and the indoor side air exhaust duct 21 are installed above the ceiling of the building 1. An indoor air supply port 22 is provided on the ceiling of each room of the building 1. Fig. 1 illustrates the indoor air supply ports 22 respectively provided in the second room 1b and the third room 1c. One end side of the indoor side air supply duct 20 is connected to the air supply path 10a of the ventilator body 10. The other end side of the indoor side air supply duct 20 is connected to each of the indoor air supply ports 22.

An indoor air exhaust port 23 is provided on the ceiling of each room of the building 1. Fig. 1 illustrates the indoor air exhaust port 23 provided in the first room 1a. One end side of the indoor side air exhaust duct 21 is connected to the air exhaust path 10b of the ventilator body 10. The other end side of the indoor side air exhaust duct 21 is connected to each indoor air exhaust port 23.

Note that both the indoor air supply port 22 and the indoor air exhaust port 23 are not necessarily provided at all the rooms of the building 1. The respective rooms of the building 1 are communicated through, for example, an undercut of a door of each room, a louver provided at the door, or the like, a hallway, or the like. Thus, the indoor air supply port 22 only requires to be provided in at least one of the rooms. In a similar manner, the indoor air exhaust port 23 only requires to be provided in at least one of the rooms.

In the building 1, an outdoor air side air supply duct 24 and an outdoor air side air exhaust duct 25 are provided. In the illustrated configuration example, the outdoor air side air supply duct 24 and the outdoor air side air exhaust duct 25 are installed above the ceiling of the building 1. One end side of the outdoor air side air supply duct 24 is connected to the air supply path 10a of the ventilator body 10. The other end side of the outdoor air side air supply duct 24 is communicated with outdoor air. Further, one end side of the outdoor air side air exhaust duct 25 is connected to the air exhaust path 10b of the ventilator body 10. The other end side of the outdoor air side air exhaust duct 25 is communicated with outdoor air.

The ventilator body 10 includes an air supply fan 11 and an air exhaust fan 12. The air supply fan 11 is positioned in the air supply path 10a of the chassis of the ventilator body 10. The air exhaust fan 12 is positioned in the air exhaust path 10b of the chassis of the ventilator body 10.

When the air supply fan 11 operates, outdoor air outside the building 1 is taken into the air supply path 10a of the ventilator body 10 through the outdoor air side air supply duct 24. Then, the outdoor air taken into the air supply path 10a is sent out to the indoor side air supply duct 20 by the air supply fan 11. The air sent out to the indoor side air supply duct 20 is supplied into each room from the indoor air supply port 22. The outdoor air side air supply duct 24, the air supply path 10a, the indoor side air supply duct 20 and the indoor air supply port 22 constituted as described above are one example of the air supply unit that introduces outdoor air from outside a room and supplies the air into the room.

When the air exhaust fan 12 operates, air inside each room is sucked into the air exhaust path 10b of the ventilator body 10 from the indoor air exhaust port 23 through the indoor side air exhaust duct 21. The outdoor air sucked into the air exhaust path 10b is sent out to the outdoor air side air exhaust duct 25 by the air exhaust fan 12. Then, the air sent out to the outdoor air side air exhaust duct 25 is exhausted outside the building 1 from the outdoor air side air exhaust duct 25. The indoor air exhaust port 23, the indoor side air exhaust duct 21, the air exhaust path 10b, and the outdoor air side air exhaust duct 25 constituted as described above are one example of the air exhaust unit that exhausts air inside the room to outside the room.

The ventilator constituted as described above performs first-class ventilation in which both air supply and air exhaust are mechanically performed. In the ventilator according to the present embodiment, rotation speed of each of the air supply fan 11 and the air exhaust fan 12 is variable. By changing the rotation speed of the air supply fan 11, an air supply volume of the air supply unit described above can be changed. The air supply fan 11 is one example of the air supply volume changing unit that changes the air supply volume of the air supply unit described above. In a similar manner, by changing the rotation speed of the air exhaust fan 12, air exhaust volume of the air exhaust unit described above can be changed. The air exhaust fan 12 is one example of the air exhaust volume changing unit that changes the air exhaust volume of the air exhaust unit described above.

The air supply fan 11 and the air exhaust fan 12 preferably include a direct-current (DC) motor (DC motor) as a motor for rotating the fan. The DC motor has characteristics of being able to accurately adjust rotation speed compared to an alternating current (AC) motor (AC motor), and use of the DC motor enables stable variable control of an air volume.

Note that the rotation speed of the air supply fan 11 and the air exhaust fan 12 does not have to be variable. In this case, the air supply volume changing unit may be able to change the air supply volume of the air supply unit, for example, using a damper provided in the middle of one of the air supply path 10a, the indoor side air supply duct 20, and the outdoor air side air supply duct 24. In a similar manner, the air exhaust volume changing unit may be able to change the air exhaust volume of the air exhaust unit, for example, using a damper provided in the middle of one of the air exhaust path 10b, the indoor side air exhaust duct 21, and the outdoor air side air exhaust duct 25.

The ventilator body 10 includes an air purification device 18. The air purification device 18 is, for example, positioned in the air supply path 10a of the chassis of the ventilator body 10. The air purification device 18, which includes one or more of a dust removal filter, an electric dust collection device, a gas removal filter, and a discharge device, an ultraviolet irradiation device, an ion generation device, and an ozone generation device for inactivating microorganism, virus, and the like, purifies air passing through the air purification device 18 using these means. The air passing through the air supply path 10a in which the air purification device 18 is provided is air to be supplied into the room by the air supply unit described above. In other words, the air purification device 18 is one example of the air purification unit that purifies air to be supplied into the room by the air supply unit described above. Thus, the purified air is supplied into each room of the building 1 from the indoor air supply port 22.

In the configuration example illustrated in Fig. 1, an air vent 40 is formed at a wall portion of the building 1. In the illustrated example, the air vents 40 are respectively provided in the first room 1a and the third room 1c. Inside and outside the rooms of the building 1 are communicated through the air vents 40. Note that the air vent 40 is one example of an opening through which inside and outside the rooms of the building 1 are communicated. Another example of the opening through which inside and outside the rooms are communicated can include a space formed at the wall portion of the building 1, an open window, and the like.

A configuration of the control system of the ventilator according to the present embodiment will be described next with reference to Fig. 2. As illustrated in Fig. 2, the ventilator body 10 includes a ventilator communication unit 13, a ventilator information acquisition unit 14, a ventilator input unit 15, a ventilator control unit 16, and a ventilator output unit 17.

The ventilator input unit 15 is, for example, provided as an operation panel of the ventilator body 10. The ventilator input unit 15 is provided to input a parameter, or the like, related to operation of the ventilator through operation by a user. A display unit for displaying various kinds of information related to the ventilator may be provided on the operation panel. The display unit of the operation panel is, for example, a liquid crystal display, or the like. Note that a touch panel that serves as both the ventilator input unit 15 and the display unit may be provided. Further, the ventilator input unit 15 may be provided in each room as a remote controller.

The ventilator body 10 includes, for example, a computer including a processor and a memory as hardware. The processor is also referred to as a central processing unit (CPU), a central processing device, a processing device, an arithmetic device, a microprocessor, a microcomputer or a DSP. The memory corresponds to, for example, a RAM, a ROM, a flash memory, a non-volatile or volatile semiconductor memory such as an EPROM and an EEPROM, a magnetic disc, a flexible disc, an optical disc, a compact disc, a minidisc, a DVD, or the like.

A program as software is stored in the memory of the ventilator body 10. Further, the ventilator body 10 performs predetermined processing by the processor executing the program stored in the memory and implements functions of the respective units of the ventilator communication unit 13, the ventilator information acquisition unit 14, the ventilator control unit 16 and the ventilator output unit 17 which will be described later as a result of cooperation of the hardware and the software.

Note that a circuit of the ventilator body 10 may be, for example, formed as dedicated hardware. Part of the circuit of the ventilator body 10 may be formed as dedicated hardware, and a processor and a memory may be provided in the circuit. The circuit, part of which is formed as dedicated hardware, corresponds to, for example, a single circuit, a composite circuit, a programmed processor, a parallelly programmed processor, an ASIC, an FPGA or combination thereof.

The ventilator communication unit 13 transmits/receives various kinds of information via a communication network, or the like. The ventilator body 10 can transmit/receive various kinds of information to/from outside the ventilator body 10 via the ventilator communication unit 13. Communication in this event may be executed either in a wired manner or in a wireless manner, and any communication protocol may be used if communication can be executed.

In the illustrated configuration example, the ventilator communication unit 13 is provided so as to be able to perform communication with a cloud server 104 via a network router 100. The cloud server 104 is a virtual server including one or more physical servers. The cloud server 104 provides a service of aggregating information from a weather information server 101, an equipment operation application 102, an environment sensor 103, and the like, and transmitting the aggregated information.

The weather information server 101 transmits weather forecast information of an area in which the building 1 is located. The weather forecast information to be transmitted from the weather information server 101 includes forecast values related to the pollution level of outdoor air, such as PM2.5, pollen and urban ozone. The equipment operation application 102 is, for example, an application to be executed at a smartphone, a tablet terminal, a PC, or the like. Functions equivalent to the functions of the operation panel of the ventilator input unit 15 described above are provided by the equipment operation application 102. An operation signal is transmitted from the equipment operation application 102 by the equipment operation application 102 being operated.

The environment sensor 103 detects a physical amount regarding an environment outside the building 1 and transmits a detection result. Data to be transmitted from the environment sensor 103 includes actual values related to the pollution level of the outdoor air, such as PM2.5, pollen and urban ozone.

As described above, the forecast values related to the pollution level of the outdoor air transmitted from the weather information server 101, and the actual values related to the pollution level of the outdoor air transmitted from the environment sensor 103 are aggregated to the cloud server 104. The ventilator communication unit 13 receives these kinds of data aggregated to the cloud server 104 via the network router 100, that is, the data of the forecast values and the actual values related to the pollution level of the outdoor air. Further, the ventilator communication unit 13 also receives the operation signal transmitted from the equipment operation application 102 via the cloud server 104 and the network router 100.

The ventilator information acquisition unit 14 acquires necessary information from an information source. The ventilator information acquisition unit 14 acquires the data received by the ventilator communication unit 13, that is, the data of the forecast values and the actual values related to the pollution level of the outdoor air as external environment data. Thus, the external environment data to be acquired by the ventilator communication unit 13 includes at least information regarding the pollution level of the outdoor air. Note that the external environment data only requires to include at least one of the forecast values or the actual values related to the pollution level of the outdoor air. Thus, the cloud server 104 only requires to be a server that aggregates data of at least one of the weather information server 101 or the environment sensor 103. Further, the ventilator information acquisition unit 14 also acquires the information input to the ventilator input unit 15 and the operation signal received from the ventilator communication unit 13.

The ventilator control unit 16 determines operation control content of the ventilator body 10 on the basis of the information acquired by the ventilator information acquisition unit 14. Specifically, the ventilator control unit 16 determines rotation speed, or the like, of the air supply fan 11 and the air exhaust fan 12. The ventilator output unit 17 generates a control signal of the control content determined by the ventilator control unit 16 and outputs the control signal to the air supply fan 11 and the air exhaust fan 12. Further, the air supply fan 11 and the air exhaust fan 12 operate in accordance with the control signal output from the ventilator output unit 17. In this manner, the ventilator control unit 16 controls the air supply fan 11 that is the air supply volume changing unit described above and the air exhaust fan 12 that is the air exhaust volume changing unit described above.

In the ventilator according to the present embodiment, the ventilator control unit 16 can execute first control and second control. The first control is normal ventilation control. The second control is outdoor air pollution prevention control. In the first control, the ventilator control unit 16 controls the air supply fan 11 that is the air supply volume changing unit so that the air supply volume by the air supply unit described above becomes a first air supply volume. Further, in the first control, the ventilator control unit 16 controls the air exhaust fan 12 that is the air exhaust volume changing unit so that the air exhaust volume by the air exhaust unit described above becomes a first air exhaust volume. In the second control, the ventilator control unit 16 controls the air supply fan 11 that is the air supply volume changing unit so that the air supply volume by the air supply unit described above becomes a second air supply volume. Further, in the second control, the ventilator control unit 16 controls the air exhaust fan 12 that is the air exhaust volume changing unit so that the air exhaust volume by the air exhaust unit described above becomes a second air exhaust volume.

The ventilator control unit 16 switches between the first control and the second control and performs the control on the basis of the outdoor air environment data acquired by the ventilator information acquisition unit 14. The ventilator control unit 16 determines whether or not the pollution level of the outdoor air increases above a predetermined standard on the basis of the outdoor air environment data. In the present disclosure, a case where the pollution level of the outdoor air increases includes both a case where the forecast values of the pollution level of the outdoor air increase and a case where the actual values of the pollution level of the outdoor air increase. In other words, the ventilator control unit 16 determines that the pollution level of the outdoor air increases above the standard in a case where at least one of the forecast values or the actual values of the pollution level of the outdoor air increase above the standard. Further, the ventilator control unit 16 determines that the pollution level of the outdoor air does not increase above the standard in a case where neither the forecast values nor the actual values of the pollution level of the outdoor air increase above the standard.

When the pollution level of the outdoor air does not increase above the standard, that is, in a normal case, the ventilator control unit 16 executes the first control, that is, normal ventilation control. When the pollution level of the outdoor air increases above the standard, the ventilator control unit 16 executes the second control, that is, the outdoor air pollution prevention control. In other words, the ventilator control unit 16 switches from the first control to the second control and performs the second control when the pollution level of the outdoor air increases above the predetermined standard on the basis of the outdoor air environment data.

The first air supply volume and the first air exhaust volume in the first control, and the second air supply volume and the second air exhaust volume in the second control are determined so as to satisfy the following relationship (A) or (B).
(A) An amount of increase of the second air supply volume relative to the first air supply volume is greater than an amount of increase of the second air exhaust volume relative to the first air exhaust volume.
(B) An amount of decrease of the second air supply volume relative to the first air supply volume is smaller than an amount of decrease of the second air exhaust volume relative to the first air exhaust volume.

A case where only one of the air supply volume and the air exhaust volume increases or decreases, and the other does not change is also included in the above-described cases (A) and (B). Further, the amount of increase and the amount of decrease described here may take both positive and negative values. In this case, a case where the second air supply volume increases relative to the first air supply volume, and the second air exhaust volume decreases relative to the first air exhaust volume is also included in the above-described cases (A) and (B). Thus, when the amount of increase and the amount of decrease can take both positive and negative values, the above-described (A) and (B) substantially indicate the same content.

An operation example of the ventilator according to the present embodiment will be described next with reference to flowcharts in Fig. 3 and Fig. 4. Fig. 3 illustrates an example of operation of the ventilator according to the present embodiment. In this example, first, in step S101, the ventilator information acquisition unit 14 acquires an equipment state. The equipment state described here includes an operation parameter of the ventilator input to the ventilator input unit 15, the operation signal transmitted from the equipment operation application 102, and the like.

In subsequent step S102, the ventilator control unit 16 determines whether or not to perform automatic operation control on the basis of the equipment state acquired in step S101. In other words, when the operation parameter or the operation signal indicates that automatic operation is set, the ventilator control unit 16 determines to perform automatic operation control. Further, when automatic operation is not set, the ventilator control unit 16 determines not to perform automatic operation control. When automatic operation control is not performed, the ventilator control unit 16 performs processing in step S103 next.

In step S103, the ventilator control unit 16 performs manual operation control of the ventilator. In other words, the ventilator control unit 16 controls the air supply fan 11 and the air exhaust fan 12 on the basis of a set value, or the like, of the ventilation volume input to the ventilator input unit 15 or the equipment operation application 102.

On the other hand, in step S102, when automatic operation control is performed, the ventilator control unit 16 performs processing in step S104 next. In step S104, the ventilator control unit 16 starts automatic operation control. Upon start of the automatic operation control, the ventilator control unit 16 performs, for example, the first control, that is, normal ventilation control, described above. In this case, the ventilator control unit 16 controls the air supply fan 11 so that the air supply volume becomes the first air supply volume and controls the air exhaust fan 12 so that the air exhaust volume becomes the first air exhaust volume.

In subsequent step S105, the ventilator information acquisition unit 14 acquires external information. The external information described here is the external environment data described above. The external environment data includes information (at least one of the forecast values or the actual values) regarding the pollution level of the outdoor air. After step S105, the ventilator control unit 16 performs processing in step S106 next.

In step S106, the ventilator control unit 16 determines whether or not the pollution level of the outdoor air is equal to or higher than the standard on the basis of the external information, that is, the external environment data acquired in step S105. When the pollution level of the outdoor air is not equal to or higher than the standard, the ventilator control unit 16 performs processing in step S107 next. In step S107, the ventilator control unit 16 performs the normal ventilation control, that is, the first control described above.

On the other hand, in step S106, when the pollution level of the outdoor air is equal to or higher than the standard, the ventilator control unit 16 performs processing in step S108 next. In step S108, the ventilator control unit 16 performs the outdoor air pollution prevention control, that is, the second control described above. Thus, in subsequent step S109, the ventilator control unit 16 increases an operation amount of the air supply fan 11 by a fixed amount from an initial state. The initial state described here is a state in which the automatic operation control is started in step S104. As described above, when the first control is performed upon start of the automatic operation control, the air supply volume in the initial state is the first air supply volume. In other words, in step S109, the ventilator control unit 16 increases the operation amount of the air supply fan 11 so as to increase the air supply volume from the first air supply volume to the second air supply volume. Note that in this example, the operation amount of the air exhaust fan 12 is not changed. After step S109, the ventilator control unit 16 performs processing in step S110 next.

In step S110, the ventilator control unit 16 maintains an operation state in step S109 for a predetermined fixed period. Then, after the fixed period has elapsed, the processing returns to step S105, and the ventilator continues operation.

Then, Fig. 4 illustrates another example of the operation of the ventilator according to the present embodiment. Processing from step S201 to step S208 and step S210 in Fig. 4 is the same as the processing from step S101 to step S108 and step S110 in Fig. 3. Thus, here, description regarding the processing from step S201 to step S208 and step S210 in Fig. 4 will be omitted to avoid overlapping.

After step S208 in Fig. 4, the ventilator control unit 16 performs processing in step S209. In step S209, the ventilator control unit 16 decreases the operation amount of the air exhaust fan 12 by a fixed amount from the initial state. The initial state described here is a state where automatic operation control is started in step S204. When the first control is performed upon start of the automatic operation control, the air exhaust volume in the initial state is the first air exhaust volume. In other words, in step S209, the ventilator control unit 16 decreases the operation amount of the air exhaust fan 12 so as to decrease the air exhaust volume from the first air exhaust volume to the second air exhaust volume. Note that in this example, the operation amount of the air supply fan 11 is not changed. Then, after step S209, the ventilator control unit 16 performs processing in step S210 next.

In the ventilator constituted as described above, the ventilator control unit 16 switches from the first control that is the normal ventilation control to the second control that is the outdoor air pollution prevention control on the basis of the outdoor air environment data when the pollution level of the outdoor air increases above the predetermined standard. In the outdoor air pollution prevention control, the relative air supply volume relative to the air exhaust volume is increased compared to the normal ventilation control. Thus, a relative pressure inside the room relative to a pressure outside the room increases. Thus, in the outdoor air pollution prevention control, compared to the normal ventilation control, it is possible to make it difficult for pollution of the outdoor air to flow into the room through the space such as the air vent 40 of the building 1. In other words, it is possible to efficiently prevent pollution outside the room from flowing into the room by adjusting the air supply volume and the air exhaust volume in accordance with the pollution level of the outdoor air. Further, this makes it possible to secure comfortableness of people inside the room.

Note that an outdoor air quality sensor that detects outdoor air quality may be further provided as the environment sensor 103. The outdoor air quality sensor detects one or more of a gas concentration of VOC, fart, carbon dioxide, or the like, a dust concentration of dust or the like, and microbial biomass of virus, mold, bacteria, or the like in the outdoor air as the outdoor air quality. In this case, the external environment data to be acquired by the ventilator information acquisition unit 14 also includes detection data of the outdoor air quality sensor of the environment sensor 103. Further, the ventilator control unit 16 determines whether or not the pollution level of the outdoor air increases above the predetermined standard on the basis of the external environment data also including the detection data of the outdoor air quality sensor. Thus, in this case, the ventilator control unit 16 controls the air supply fan 11 and the air exhaust fan 12 also in accordance with the detection result by the outdoor air quality sensor.

Further, an indoor air quality sensor that detects indoor air quality may be provided as the environment sensor 103. The indoor air quality sensor detects one or more of a gas concentration of VOC, fart, carbon dioxide, or the like, a dust concentration of dust or the like, and microbial biomass of virus, mold, bacteria, or the like in the indoor air in each room of the building 1 as the air quality. In this case, the ventilator information acquisition unit 14 also acquires detection data of the indoor air quality sensor of the environment sensor 103 via the ventilator communication unit 13, the network router 100 and the cloud server 104. Then, the ventilator control unit 16 controls the air supply fan 11 and the air exhaust fan 12 in accordance with the detection result by the indoor air quality sensor. For example, the ventilator control unit 16 determines whether or not the pollution level of indoor air is equal to or higher than a predetermined standard on the basis of the detection result by the indoor air quality sensor. Then, when the pollution level of the indoor air is equal to or higher than the standard, the ventilator control unit 16 performs third control. The third control is indoor pollution exhaust control. In the third control that is the indoor pollution exhaust control, the ventilator control unit 16 controls the air supply fan 11 that is the air supply volume changing unit and the air exhaust fan 12 that is the air exhaust volume changing unit so that the air exhaust volume of the air exhaust unit described above becomes greater than the air supply volume of the air supply unit described above. This makes it possible to quickly exhaust pollution inside the room to outside the room. Alternatively, the ventilator control unit 16 may perform the third control that is the indoor pollution exhaust control when the pollution level of the indoor air is equal to or higher than the pollution level of the outdoor air on the basis of the external environment data and the detection result by the indoor air quality sensor.

In the configuration example described above, the ventilator control unit 16 of the ventilator body 10 determines which of the first control and the second control is to be performed by the ventilator. However, determination as to which of the first control and the second control is to be performed does not have to be performed in the ventilator body 10. For example, the cloud server 104 may have a determination unit that determines which of the first control and the second control is to be performed. In this case, the ventilator control unit 16 controls the air supply fan 11 and the air exhaust fan 12 in accordance with control content determined at the determination unit of the cloud server 104. Thus, in this case, it can be said that a control unit that controls the air supply fan 11 and the air exhaust fan 12 is constituted with the ventilator control unit 16 and the determination unit of the cloud server 104.

### Second embodiment

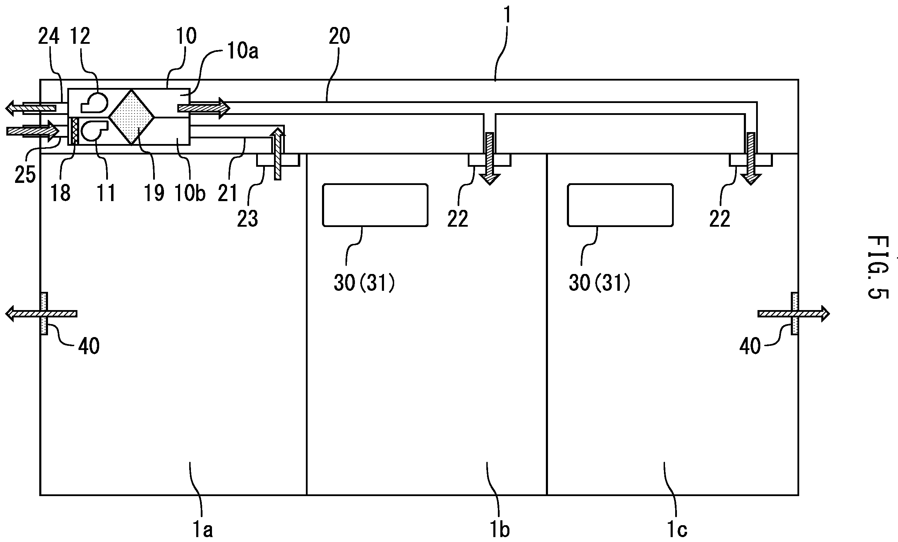

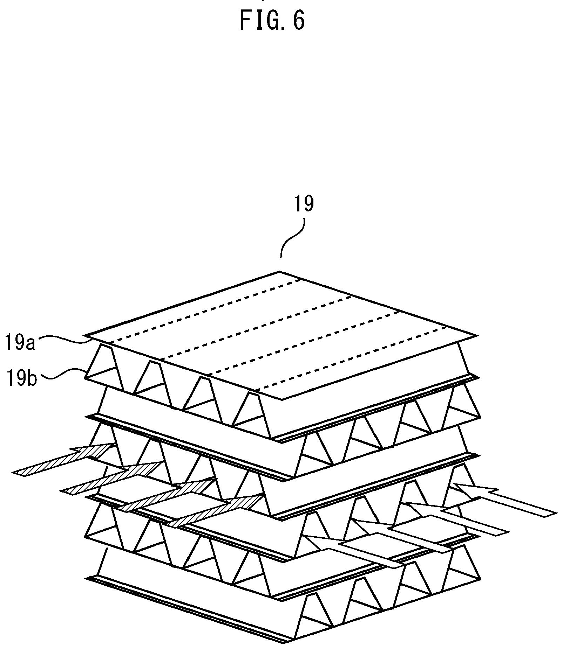

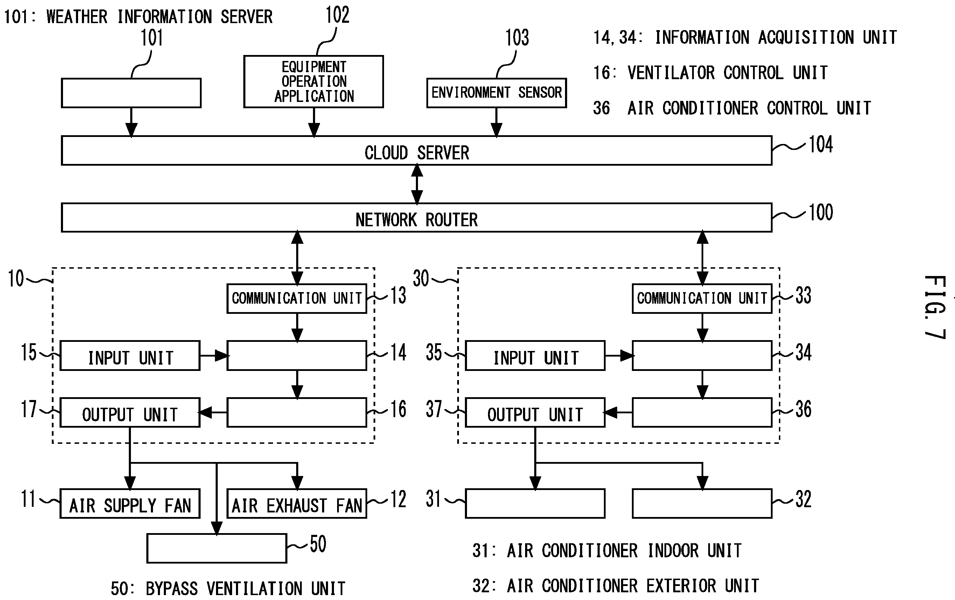

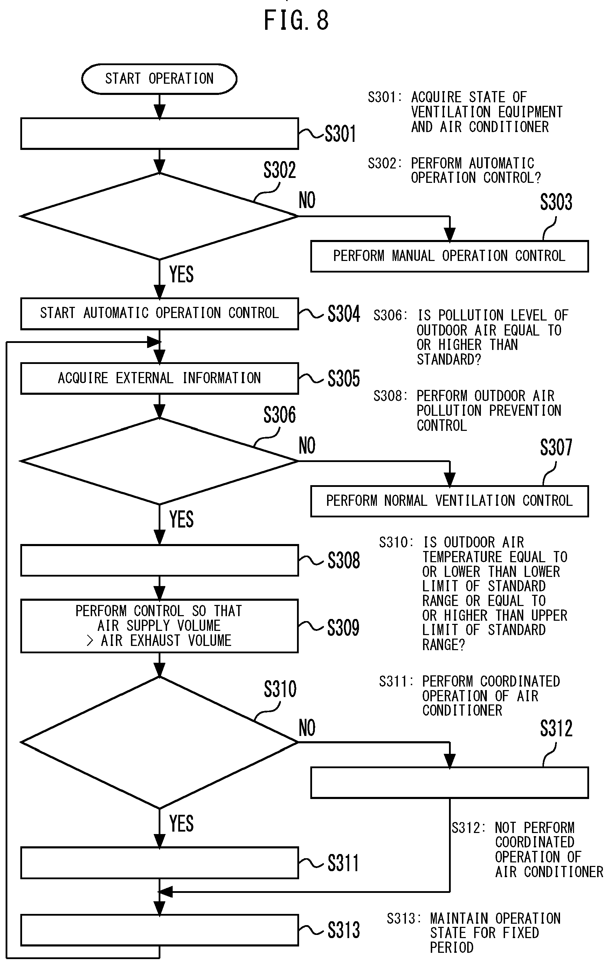

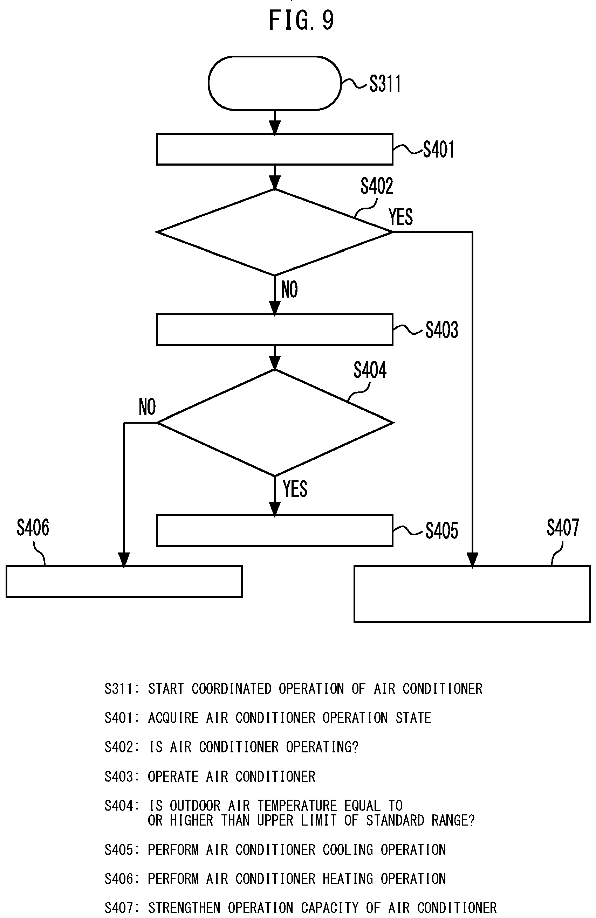

A second embodiment of the present disclosure will be described with reference to Fig. 5 to Fig. 9. Fig. 5 is a cross-sectional view schematically illustrating a configuration of a building in which the ventilator and the ventilation system are installed. Fig. 6 is a perspective view of a heat exchange element provided in the ventilator. Fig. 7 is a block diagram illustrating a configuration of a control system of the ventilator and the ventilation system. Fig. 8 is a flowchart illustrating an example of operation of the ventilation system. Fig. 9 is a flowchart illustrating an example of operation of an air conditioner.

In the second embodiment described here, the ventilator includes a heat exchange element in the configuration of the first embodiment described above. Further, the ventilator including the heat exchange element and an air conditioner constitute the ventilation system. The ventilation system according to the second embodiment will be described below mainly focusing on a difference from the first embodiment. Components for which description is omitted are basically similar to the components in the first embodiment. In the following description, the same reference numerals used in the first embodiment are assigned to the components that are similar to or correspond to the components in the first embodiment in principle.

The ventilation system according to the present embodiment includes the ventilator body 10 and an air conditioner 30 as illustrated in Fig. 5. The air conditioner 30 can perform air conditioning inside the room of the building 1. In the illustrated example, the air conditioners 30 are installed in the second room 1b and the third room 1c. The air conditioner 30, for example, cools or heats air to cool or warm up the second room 1b and the second room 1b that are a plurality of rooms. The air conditioner 30 includes an air conditioner indoor unit 31 and an air conditioner exterior unit 32. Illustration of the air conditioner exterior unit 32 is omitted in Fig. 5.

The ventilator body 10 according to the present embodiment includes a heat exchange element 19. The heat exchange element 19 is provided inside the chassis of the ventilator body 10. The air supply path 10a and the air exhaust path 10b are formed so as to intersect with each other inside the chassis of the ventilator body 10. The heat exchange element 19 is provided at a portion where the air supply path 10a and the air exhaust path 10b intersect. The heat exchange element 19 is an element that causes heat exchange between air passing through the air supply path 10a and air passing through the air exhaust path 10b.

The heat exchange element 19 is, for example, constituted by a plate-like heat exchange sheet 19a and a support sheet 19b having a corrugated structure being alternately laminated as illustrated in Fig. 6. The heat exchange sheet 19a separates an air supply flow path from an air exhaust flow path. Heat exchange is performed between supply air and exhaust air through the heat exchange sheet 19a. The support sheet 19b supports the heat exchange sheet 19a.

A plurality of support sheets 19b are positioned so that longitudinal directions of groove concave portions in the corrugated structure are orthogonal to each other between adjacent two support sheets 19b across the heat exchange sheet 19a. A plurality of air supply flow paths are formed in parallel between the support sheet 19b located on one surface of the heat exchange sheet 19a and the one surface of the heat exchange sheet 19a. Further, a plurality of air exhaust flow paths are formed in parallel between the support sheet 19b located on the other surface of the heat exchange sheet 19a and the other surface of the heat exchange sheet 19a.

When viewed from a direction perpendicular to the surface of the heat exchange sheet 19a, the air supply flow paths and the air exhaust flow paths are orthogonal to each other. If air flows through these flow paths, heat is exchanged between supply air in contact with the one surface of the heat exchange sheet 19a and exhaust air in contact with the other surface of the heat exchange sheet 19a through the heat exchange sheet 19a without the supply air and the exhaust air being mixed. In other words, heat of air with a higher temperature between the supply air and the exhaust air is transferred to air on the other surface of the heat exchange sheet 19a through the heat exchange sheet 19a. In this manner, heat is exchanged between the supply air and the exhaust air passing through the heat exchange element 19.

Air inside the room is sucked into the indoor side air exhaust duct 21 from the indoor air exhaust port 23 by the air exhaust fan 12 and is introduced to the air exhaust path 10b of the ventilator body 10. Thereafter, the air inside the room passes through the heat exchange element 19. At the same time, outdoor fresh air passes through the outdoor air side air supply duct 24 by the air supply fan 11 and is introduced into the air supply path 10a of the ventilator body 10. Then, the outdoor fresh air passes through the heat exchange element 19. In this event, the air inside the room and the outdoor fresh air circulate so as to intersect via the heat exchange element 19, and only heat is exchanged through the heat exchange element 19. Then, the air inside the room is exhausted to outside the room from the outdoor air side air exhaust duct 25. The outdoor fresh air passes through the indoor side air supply duct 20 and is supplied into the room from the indoor air supply port 22.

In this manner, the heat exchange element 19 causes heat exchange between air passing through the air supply unit described above and air passing through the air exhaust unit described above. According to the present embodiment, use of the ventilator body 10 including the heat exchange element 19 enables heat exchange between cool air when inside the room is cooled and warm air when inside the room is heated, and outdoor fresh air. This results in enabling reduction in load of cooling and heating.

Further, the ventilator body 10 may include a bypass ventilation part 50 enabling air supply by the air supply unit and air exhaust by the air exhaust unit not through the heat exchange element 19. Illustration of the bypass ventilation part 50 is omitted in Fig. 5. The bypass ventilation part 50 includes a bypass air supply path, a bypass air exhaust path, a bypass switching damper, and the like. The bypass air supply path is a path that is communicated from the outdoor air side air supply duct to the indoor side air supply duct 20 not through the heat exchange element 19 inside the chassis of the ventilator body 10. The bypass air exhaust path is a path that is communicated from the indoor side air exhaust duct to the outdoor air side air exhaust duct 25 not through the heat exchange element 19 inside the chassis of the ventilator body 10. The bypass switching damper is a damper that switches whether air passing through inside the chassis of the ventilator body 10 passes through the air supply path 10a, the air exhaust path 10b and the heat exchange element 19 or passes through the bypass air supply path and the bypass air exhaust path.

A configuration of the control system of the ventilation system according to the present embodiment will be described next with reference to Fig. 7. In the configuration example described here, an outdoor air temperature sensor that detects an air temperature outside the room is further provided as the environment sensor 103 in addition to the configuration in the first embodiment. As illustrated in Fig. 7, the ventilator control unit 16 of the ventilator body 10 also controls the bypass ventilation part 50 in addition to the air supply fan 11 and the air exhaust fan 12. The control of the bypass ventilation part 50 mainly refers to control of the bypass switching damper of the bypass ventilation part 50.

The ventilator control unit 16 switches the bypass switching damper of the bypass ventilation part 50 in accordance with the outdoor air temperature detected by the outdoor air temperature sensor of the environment sensor 103. Specifically, the ventilator control unit 16 switches the bypass switching damper of the bypass ventilation part 50 in accordance with whether or not the air temperature outside the room falls within a predetermined standard range. When the air temperature outside the room is equal to or higher than an upper limit of the standard range, or when the air temperature outside the room is equal to or lower than a lower limit of the standard range, the ventilator control unit 16 determines that the air temperature outside the room does not fall within the predetermined standard range. On the other hand, when the air temperature outside the room is less than the upper limit described above and exceeds the lower limit, the ventilator control unit 16 determines that the air temperature outside the room falls within the predetermined standard range.

When the air temperature outside the room does not fall within the standard range, the ventilator control unit 16 switches the bypass switching damper of the bypass ventilation part 50 so that heat exchange by the heat exchange element 19 is performed. When the air temperature outside the room falls within the standard range, the ventilator control unit 16 switches the bypass switching damper of the bypass ventilation part 50 so that heat exchange by the heat exchange element 19 is not performed. By this means, when the outdoor air temperature falls within a relatively comfortable temperature range, it is possible to perform ventilation not through the heat exchange element 19, so that it is possible to reduce a pressure loss due to passing through the heat exchange element 19 and reduce power consumption of the ventilator body 10.

Note that the ventilator control unit 16 switches the bypass switching damper of the bypass ventilation part 50 in accordance with the current season. In other words, when the current season is summer or winter, the ventilator control unit 16 switches the bypass switching damper of the bypass ventilation part 50 so that heat exchange by the heat exchange element 19 is performed. Further, when the current season is spring or autumn, that is, an intermediate season, the ventilator control unit 16 switches the bypass switching damper of the bypass ventilation part 50 so that heat exchange by the heat exchange element 19 is not performed. The current season may be determined, for example, by the user operating an air conditioner input unit 35, or the like, to input schedule or by information regarding current date and time being acquired from the cloud server 104, or the like.

Further, as illustrated in Fig. 7, the air conditioner 30 includes an air conditioner communication unit 33, an air conditioner information acquisition unit 34, an air conditioner input unit 35, an air conditioner control unit 36 and an air conditioner output unit 37. The air conditioner input unit 35 is, for example, provided as an operation panel of the air conditioner 30. The air conditioner input unit 35 is provided to input a parameter, or the like, related to operation of the air conditioner 30 through operation by the user. A display unit for displaying various kinds of information related to the air conditioner 30 may be provided at the operation panel. The display unit of the operation panel is, for example, a liquid crystal display, or the like. Note that a touch panel that serves as both the air conditioner input unit 35 and the display unit may be provided. Further, the air conditioner input unit 35 may be provided in each room as a remote controller.

The air conditioner 30 includes, for example, a computer including a processor and a memory as hardware. The processor is also referred to as a central processing unit (CPU), a central processing device, a processing device, an arithmetic device, a microprocessor, a microcomputer or a DSP. The memory corresponds to, for example, a RAM, a ROM, a flash memory, a non-volatile or volatile semiconductor memory such as an EPROM and an EEPROM, a magnetic disc, a flexible disc, an optical disc, a compact disc, a minidisc, a DVD, or the like.

In the memory of the air conditioner 30, a program as software is stored. Further, the air conditioner 30 performs predetermined processing by the processor executing the program stored in the memory and implements functions of the respective units of the air conditioner communication unit 33, the air conditioner information acquisition unit 34, the air conditioner control unit 36, and the air conditioner output unit 37 which will be described later as a result of cooperation of the hardware and the software.

Note that a circuit of the air conditioner 30 may be, for example, formed as dedicated hardware. Part of the circuit of the air conditioner 30 may be formed as dedicated hardware, and the circuit may include a processor and a memory. The circuit, part of which is formed as dedicated hardware, corresponds to, for example, a single circuit, a composite circuit, a programmed processor, a parallelly programmed processor, an ASIC, an FPGA or combination thereof.

The air conditioner communication unit 33 transmits/receives various kinds of information via a communication network, or the like. The air conditioner 30 can transmit/receive various kinds of information to/from outside the air conditioner 30 via the air conditioner communication unit 33. Communication in this event may be executed either in a wired manner or in a wireless manner, and any communication protocol may be used if communication can be executed.

In the illustrated configuration example, the air conditioner communication unit 33 is provided so as to be able to perform communication with the cloud server 104 via the network router 100. The cloud server 104 provides a service of aggregating information from the weather information server 101, the equipment operation application 102, the environment sensor 103, and the like, and transmitting the aggregated information. Further, the cloud server 104 provides a service for the ventilator body 10 and the air conditioner 30 to operate in coordination with each other.

For example, the ventilator body 10 transmits information as to whether the current control content is the first control or the second control described above, from the ventilator communication unit 13 to the cloud server 104. The cloud server 104 transmits the information regarding the current control content of the ventilator body 10 to the air conditioner 30. The air conditioner communication unit 33 receives the information regarding the current control content of the ventilator body 10, transmitted from the cloud server 104. The air conditioner information acquisition unit 34 acquires the information regarding the current control content of the ventilator body 10, received by the air conditioner communication unit 33. The air conditioner information acquisition unit 34 also acquires information input to the air conditioner input unit 35.

The air conditioner control unit 36 determines operation control content of the air conditioner 30 on the basis of the information acquired by the air conditioner information acquisition unit 34. Specifically, the air conditioner control unit 36 determines operation content, or the like, of the air conditioner indoor unit 31 and the air conditioner exterior unit 32. The operation content of the air conditioner indoor unit 31 is, for example, a wind direction, an air volume, or the like, of air blowing out from the air conditioner indoor unit 31. The operation content of the air conditioner exterior unit 32 is, for example, operation of a compressor, or the like. The air conditioner output unit 37 generates a control signal of the control content determined by the air conditioner control unit 36 and outputs the control signal to the air conditioner indoor unit 31 and the air conditioner exterior unit 32. Then, the air conditioner indoor unit 31 and the air conditioner exterior unit 32 operate in accordance with the control signal output from the air conditioner output unit 37. In this manner, the air conditioner control unit 36 controls the air conditioner indoor unit 31 and the air conditioner exterior unit 32.

Particularly, in the ventilation system according to the present embodiment, the air conditioner 30 can perform coordinated air conditioning operation. The coordinated air conditioning operation is operation of the air conditioner 30 performed in coordination with the outdoor air pollution prevention control of the ventilator body 10 when the ventilator body 10 performs the second control, that is, the outdoor air pollution prevention control described above.

As described above, the air conditioner information acquisition unit 34 acquires the information regarding the current control content of the ventilator body 10. Then, the air conditioner control unit 36 controls the air conditioner indoor unit 31 and the air conditioner exterior unit 32 to cause the air conditioner 30 to perform coordinated air conditioning operation when the current control content of the ventilator body 10 is the outdoor air pollution prevention control. In the coordinated air conditioning operation, operation capacity of the air conditioner 30 is strengthened. In other words, when the air conditioner 30 is performing cooling operation, the air conditioner control unit 36 controls the air conditioner indoor unit 31 and the air conditioner exterior unit 32 so as to lower a set temperature of cooling operation, increase an air volume or perform both of them. Further, when the air conditioner 30 is performing heating operation, the air conditioner control unit 36 controls the air conditioner indoor unit 31 and the air conditioner exterior unit 32 so as to increase a set temperature of heating operation, increase an air volume or perform both of them.

Also in the ventilation system constituted as described above, in a similar manner to the first embodiment, it is possible to efficiently prevent pollution outside the room from flowing into the room by adjusting the air supply volume and the air exhaust volume in accordance with the pollution level of the outdoor air. Further, in the outdoor air pollution prevention control, compared to the normal ventilation control, the relative air supply volume relative to the air exhaust volume is increased. Thus, while a volume of outdoor air flowing into the room increases, and a temperature, humidity, or the like, inside the room is susceptible to the outdoor air, by causing the air conditioner 30 to perform coordinated air conditioning operation, influence of the outdoor air can be reduced. It is therefore possible to efficiently prevent pollution outside a room from flowing into the room while preventing degradation of thermal comfortableness inside the room.

Further, in a case where the outdoor air temperature sensor is provided as the environment sensor 103, the air conditioner control unit 36 may perform coordinated air conditioning operation in accordance with the outdoor air temperature in addition to the control content of the ventilator body 10. In this case, when the current control content of the ventilator body 10 is outdoor air pollution prevention control, the air conditioner control unit 36 further determines whether or not the outdoor air temperature detected by the outdoor air temperature sensor of the environment sensor 103 falls within the standard range described above. Then, if the outdoor air temperature does not fall within the standard range, the air conditioner control unit 36 causes the air conditioner 30 to perform coordinated air conditioning operation. On the other hand, even if the ventilator body 10 performs outdoor air pollution prevention control, if the outdoor air temperature falls within the standard range, the air conditioner control unit 36 does not cause the air conditioner 30 to perform coordinated air conditioning operation. In this case, the air conditioner 30 performs coordinated air conditioning operation when the ventilator performs the second control, and the air temperature outside the room does not fall within the predetermined standard range.

This makes it possible to achieve both prevention of degradation of thermal comfortableness and prevention of inflow of pollution into the room while preventing increase in power consumption at the air conditioner 30 by causing the air conditioner 30 to perform coordinated air conditioning operation, particularly, in a case where the outdoor air temperature is higher or lower than the standard range.

An operation example of the ventilator according to the present embodiment will be described next with reference to the flowcharts in Fig. 8 and Fig. 9. Fig. 8 illustrates an example of operation of the ventilation system according to the present embodiment. In this example, first, in step S301, the ventilator information acquisition unit 14 acquires a state of the ventilator body 10. Further, the air conditioner information acquisition unit 34 acquires a state of the air conditioner 30. The state of the ventilator body 10 described here includes the operation parameter of the ventilator input to the ventilator input unit 15, the operation signal transmitted from the equipment operation application 102, and the like. Further, the state of the air conditioner 30 described here includes the operation parameter of the air conditioner 30 input to the air conditioner input unit 35, the operation signal transmitted from the equipment operation application 102, and the like.

In subsequent step S302, the ventilator control unit 16 determines whether or not to perform automatic operation control on the basis of the equipment state acquired in step S301. In other words, when the operation parameter and the operation signal indicate that automatic operation is set, the ventilator control unit 16 determines to perform automatic operation control. Further, when automatic operation is not set, the ventilator control unit 16 determines not to perform automatic operation control. When automatic operation control is not performed, the ventilator control unit 16 performs processing in step S303 next.

In step S303, the ventilator control unit 16 performs manual operation control of the ventilator. In other words, the ventilator control unit 16 controls the air supply fan 11 and the air exhaust fan 12 on the basis of a set value, or the like, of the ventilation volume input to the ventilator input unit 15 or the equipment operation application 102.

On the other hand, in step S302, when automatic operation control is performed, the ventilator control unit 16 performs processing in step S304 next. In step S304, the ventilator control unit 16 starts automatic operation control. Upon start of the automatic operation control, the ventilator control unit 16 performs, for example, the first control, that is, normal ventilation control described above. In this case, the ventilator control unit 16 controls the air supply fan 11 so that the air supply volume becomes the first air supply volume and controls the air exhaust fan 12 so that the air exhaust volume becomes the first air exhaust volume.

In subsequent step S305, the ventilator information acquisition unit 14 acquires external information. The external information described here is the external environment data described above. The external environment data includes information (at least one of the forecast values or the actual values) regarding the pollution level of the outdoor air. Further, the air conditioner information acquisition unit 34 acquires the outdoor air temperature detected by the outdoor air temperature sensor of the environment sensor 103. After step S305, the ventilator control unit 16 performs processing in step S306 next.

In step S306, the ventilator control unit 16 determines whether or not the pollution level of the outdoor air is equal to or higher than the standard on the basis of the external information, that is, the external environment data acquired in step S305. When the pollution level of the outdoor air is not equal to or higher than the standard, the ventilator control unit 16 performs processing in step S307 next. In step S307, the ventilator control unit 16 performs the normal ventilation control, that is, the first control described above.

On the other hand, when the pollution level of the outdoor air is equal to or higher than the standard in step S306, the ventilator control unit 16 performs processing in step S308 next. In step S308, the ventilator control unit 16 performs the outdoor air pollution prevention control, that is, the second control described above. In the example described here, in subsequent step S309, the ventilator control unit 16 controls one or both of the air supply fan 11 and the air exhaust fan 12 so that the air supply volume becomes greater than the air exhaust volume. The ventilator control unit 16 increases the operation amount of the air supply fan 11 by a fixed amount from the initial state, decreases the operation amount of the air exhaust fan 12 by a fixed amount from the initial state, or performs both of them.

After step S309, in step S310, the air conditioner control unit 36 determines whether or not the outdoor air temperature acquired in step S305 falls within the standard range described above. In other words, the air conditioner control unit 36 determines whether or not the outdoor air temperature is equal to or higher than the upper limit of the standard range or equal to or lower than the lower limit of the standard range. When the outdoor air temperature is equal to or higher than the upper limit of the standard range or equal to or lower than the lower limit of the standard range, that is, when the outdoor air temperature does not fall within the standard range, the air conditioner control unit 36 performs processing in step S311 next.

In step S311, the air conditioner control unit 36 controls the air conditioner 30 to perform the coordinated air conditioning operation described above. On the other hand, when the outdoor air temperature is neither equal to or higher than the upper limit of the standard range nor equal to or lower than the lower limit of the standard range, that is, when the outdoor air temperature falls within the standard range, the air conditioner control unit 36 performs processing in step S312 next. In step S312, the air conditioner 30 does not perform the coordinated air conditioning operation described above. After step S311 and S312, the ventilator control unit 16 and the air conditioner control unit 36 perform processing in step S313.

In step S313, the ventilator control unit 16 maintains the operation state in step S309 for a predetermined fixed period. At the same time, the air conditioner control unit 36 maintains the operation state in step S311 or S312 for the predetermined fixed period. Then, after the fixed period has elapsed, the processing returns to step S305, and the ventilator and the air conditioner 30 continue operation.

An operation example of the air conditioner 30 in the coordinated air conditioning operation in step S311 will be described next with reference to the flowchart in Fig. 9. If the coordinated air conditioning operation in step S311 is started, first, in step S401, the air conditioner information acquisition unit 34 acquires the operation state of the air conditioner 30. In subsequent step S402, the air conditioner control unit 36 determines whether or not the air conditioner 30 is operating on the basis of the operation state of the air conditioner 30 acquired in step S401. When the air conditioner 30 is operating, the air conditioner control unit 36 performs processing in step S407 next. In step S407, the air conditioner control unit 36 controls the air conditioner indoor unit 31 and the air conditioner exterior unit 32 to strengthen operation capacity of the air conditioner 30.

On the other hand, when the air conditioner 30 is not operating in step S402, the air conditioner control unit 36 performs processing in step S403 next. In step S403, the air conditioner control unit 36 starts operation of the air conditioner 30. In subsequent step S404, the air conditioner control unit 36 determines whether or not the outdoor air temperature is equal to or higher than the upper limit of the standard range described above.

When the outdoor air temperature is equal to or higher than the upper limit of the standard range, the air conditioner control unit 36 performs processing in step S405 next. In this case, the outdoor air temperature is high, and the air conditioner control unit 36 controls the air conditioner indoor unit 31 and the air conditioner exterior unit 32 so that the air conditioner 30 performs cooling operation in step S405.

On the other hand, when the outdoor air temperature is not equal to or higher than the upper limit of the standard range in step S404, the air conditioner control unit 36 performs processing in step S406 next. In this case, the outdoor air temperature is equal to or lower than the lower limit of the standard range. Thus, the outdoor air temperature is low, and thus, the air conditioner control unit 36 controls the air conditioner indoor unit 31 and the air conditioner exterior unit 32 so that the air conditioner 30 performs heating operation in step S406.

Note that in the ventilation system according to the present embodiment, control content of the ventilator body 10 and the air conditioner 30 may be determined at the cloud server 104. Further, the ventilator body 10 does not have to include the heat exchange element 19. In this case, the ventilation system includes the ventilator body 10 not including the heat exchange element 19 and the air conditioner 30.

### Industrial Applicability

The present disclosure can be utilized in a ventilator that performs first-class ventilation in which both air supply and air exhaust are performed through mechanical ventilation, and a ventilation system including the ventilator that performs the first-class ventilation and an air conditioner.

### Reference Signs List

- 1: Building
- 1a: First room
- 1b: Second room
- 1c: Third room
- 10: Ventilator body
- 10a: Air supply path
- 10b: Air exhaust path
- 11: Air supply fan
- 12: Air exhaust fan
- 13: Ventilator communication unit
- 14: Ventilator information acquisition unit
- 15: Ventilator input unit
- 16: Ventilator control unit
- 17: Ventilator output unit
- 18: Air purification device
- 19: Heat exchange element
- 19a: Heat exchange sheet
- 19b: Support sheet
- 20: Indoor side air supply duct
- 21: Indoor side air exhaust duct
- 22: Indoor air supply port
- 23: Indoor air exhaust port
- 24: Outdoor air side air supply duct
- 25: Outdoor air side air exhaust duct
- 30: Air conditioner
- 31: Air conditioner indoor unit
- 32: Air conditioner exterior unit
- 33: Air conditioner communication unit
- 34: Air conditioner information acquisition unit
- 35: Air conditioner input unit
- 36: Air conditioner control unit
- 37: Air conditioner output unit
- 40: Air vent
- 50: Bypass ventilation part
- 100: Network router
- 101: Weather information server
- 102: Equipment operation application
- 103: Environment sensor
- 104: Cloud server

## Claims

1. A ventilator comprising:
an air supply unit configured to introduce outdoor air from outside a room and supply the air into the room;
an air exhaust unit configured to exhaust air inside the room to outside the room;
an air supply volume changing unit configured to change air supply volume of the air supply unit;
an air exhaust volume changing unit configured to change air exhaust volume of the air exhaust unit;
an air purification unit configured to purify the air to be supplied into the room by the air supply unit;
a data acquisition unit configured to acquire outdoor air environment data including at least information on pollution level of the outdoor air from an external data source, and
a control unit configured to control the air supply volume changing unit and the air exhaust volume changing unit,
the control unit being configured to, based on the outdoor air environment data, switch from first control to second control and perform the second control when the pollution level of the outdoor air increases above a predetermined standard,
the control unit being configured to set the air supply volume of the air supply unit to a first air supply volume and set the air exhaust volume of the air exhaust unit to a first air exhaust volume in the first control,
the control unit being configured to set the air supply volume of the air supply unit to a second air supply volume and set the air exhaust volume of the air exhaust unit to a second air exhaust volume in the second control,
an amount of increase of the second air supply volume relative to the first air supply volume being greater than an amount of increase of the second air exhaust volume relative to the first air exhaust volume.

2. A ventilator comprising:
an air supply unit configured to introduce outdoor air from outside a room and supply the air into the room;
an air exhaust unit configured to exhaust air inside the room to outside the room;
an air supply volume changing unit configured to change air supply volume of the air supply unit;
an air exhaust volume changing unit configured to change air exhaust volume of the air exhaust unit;
an air purification unit configured to purify the air to be supplied into the room by the air supply unit;
a data acquisition unit configured to acquire outdoor air environment data including at least information on pollution level of the outdoor air from outside, and
a control unit configured to control the air supply volume changing unit and the air exhaust volume changing unit,
the control unit being configured to, based on the outdoor air environment data, switch from first control to second control and perform the second control when the pollution level of the outdoor air increases above a predetermined standard,
the control unit being configured to set the air supply volume of the air supply unit to a first air supply volume and set the air exhaust volume of the air exhaust unit to a first air exhaust volume in the first control,
the control unit being configured to set the air supply volume of the air supply unit to a second air supply volume and set the air exhaust volume of the air exhaust unit to a second air exhaust volume in the second control,
an amount of decrease of the second air supply volume relative to the first air supply volume being smaller than an amount of decrease of the second air exhaust volume relative to the first air exhaust volume.

3. The ventilator according to claim 1 or 2, further comprising an outdoor air quality sensor configured to detect air quality outside the room,
wherein the control unit controls the air supply volume changing unit and the air exhaust volume changing unit in accordance with a detection result by the outdoor air quality sensor.

4. The ventilator according to any one of claims 1 to 3, further comprising
an indoor air quality sensor configured to detect air quality inside the room,
wherein the control unit controls the air supply volume changing unit and the air exhaust volume changing unit in accordance with a detection result by the indoor air quality sensor.

5. The ventilator according to any one of claims 1 to 4, wherein the air purification unit includes one or more of a dust removal filter, an electric dust collection device, a gas removal filter, an ultraviolet irradiation device, an ion generation device, and an ozone generation device.

6. The ventilator according to any one of claims 1 to 5, further comprising a heat exchange element configured to cause heat exchange between air passing through the air supply unit and air passing through the air exhaust unit.

7. The ventilator according to claim 6, further comprising:
a bypass ventilation part configured to enable air supply by the air supply unit and air exhaust by the air exhaust unit not through the heat exchange element, and
an outdoor air temperature sensor configured to detect an air temperature outside the room,
wherein the control unit controls the bypass ventilation part in accordance with a detection result by the outdoor air temperature sensor.

8. A ventilation system comprising:
the ventilator according to any one of claims 1 to 7; and
an air conditioner configured to perform air conditioning inside the room,
the air conditioner being configured to perform coordinated air conditioning operation when the ventilator performs the second control.

9. A ventilation system comprising:
the ventilator according to claim 7; and
an air conditioner configured to perform air conditioning inside the room,
the air conditioner being configured to perform coordinated air conditioning operation when the ventilator performs the second control and the air temperature outside the room does not fall within a predetermined standard range.
